(19) Europäisches Patentamt
European Patent Office
Office européen des brevets

(11) **EP 4 773 102 A1**

(12) **EUROPEAN PATENT APPLICATION**
published in accordance with Art. 153(4) EPC

(43) Date of publication:
**08.07.2026 Bulletin 2026/28**

(21) Application number: 25741430.0

(22) Date of filing: **10.01.2025**

(51) International Patent Classification (IPC):
**G06V 20/40** (2022.01)

(86) International application number:
**PCT/CN2025/071813**

(87) International publication number:
**WO 2025/152868 (24.07.2025 Gazette 2025/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.01.2024 CN 202410057649**

(71) Applicants:
• **Beijing Wodong Tianjun Information Technology Co.,**
**Ltd.**
**Beijing 100176 (CN)**

• **Jingdong Technology Holding Co., Ltd.**
**Beijing 100176 (CN)**

(72) Inventors:
• **LIU, Wu**
**Beijing 100176 (CN)**
• **LIU, Xinchen**
**Beijing 100176 (CN)**
• **LIU, Kun**
**Beijing 100176 (CN)**
• **HE, Xiaodong**
**Beijing 100176 (CN)**

(74) Representative: **Prüfer & Partner mbB**
**Patentanwälte · Rechtsanwälte**
**Sohnckestraße 12**
**81479 München (DE)**

(54) **TEMPORAL ACTION SEGMENTATION METHOD AND APPARATUS, MODEL TRAINING METHOD AND APPARATUS, AND STORAGE MEDIUM**

(57)     This disclosure provides a temporal action segmentation method and apparatus, a model training method and apparatus, as well as a storage medium, which relates to the technical field of artificial intelligence. The method for training a temporal action segmentation model of the present disclosure includes: performing high-dimensional feature extraction on data of each modality in sample data to obtain a first feature for the each modality; obtaining an intermediate loss function based on the first feature through dimensionality reduction, and obtaining second feature for the each modality through dimensionality restoration; obtaining a motion representation based on the second feature and a supplementary feature, by fusing features of different modalities; and processing the motion representation through a category encoder network and a boundary encoder network separately, to obtain an action category prediction vector and a temporal boundary prediction vector, and determining an action category prediction result and a prediction loss function, wherein parameters of the temporal action segmentation model are adjusted based on the intermediate loss function and the predicted loss function until training is completed.

performing high-dimensional feature extraction on data of each modality in sample data to obtain a first feature for the each modality — S11

obtaining an intermediate loss function based on the first feature through dimensionality reduction, and obtaining second feature for the each modality through dimensionality restoration — S13

obtaining a motion representation based on the second feature and a supplementary feature, by fusing features of different modalities — S15

processing the motion representation through a category encoder network and a boundary encoder network separately, to obtain an action category prediction vector and a temporal boundary prediction vector, and determining an action category prediction result and a prediction loss function, wherein parameters of the temporal action segmentation model are adjusted based on the intermediate loss function and the predicted loss function until training is completed — S17

Fig. 1

**Description**

CROSS-REFERENCE TO RELATED APPLICATIONS

The present application is based on and claims priority to China Patent Application No. 202410057649.0, filed on January 15, 2024, the disclosure of which is incorporated by reference herein in its entirety.

TECHNICAL FIELD

The present disclosure relates to the field of artificial intelligence, in particular to a temporal action segmentation method and apparatus, a model training method and apparatus, and a storage medium.

BACKGROUND

Temporal action segmentation refers to the task of predicting the human action category for each frame of a given video. In related technologies, temporal action segmentation is usually divided into two parts: action recognition and temporal inference. In action recognition, visual features are first extracted from video frames, and then the video frame features are converted into feature vectors in a metric space using a machine learning technique (such as a deep neural network). In the metric space, video frames in different action categories have relatively large feature distances therebetween, which may facilitate action classification. In temporal inference, the focus will be on the temporal continuity of human actions, and for all frames within a continuous time segment will be predicted as have the same action category.

In related technologies, temporal action segmentation typically employs deep convolutional neural networks (CNNs) as video feature extractors and metric space learners, utilizing recurrent neural networks (RNNs), temporal convolutional networks (TCNs), or Transformer architectures for temporal modeling of frame-level action features, training deep neural networks with large-scale annotated video datasets, and optimizing deep CNNs using cross-entropy loss functions.

SUMMARY

One objective of this disclosure is to improve the accuracy of action segmentation.

According to an aspect of some embodiments of the present disclosure, there is provided a training method of a temporal action segmentation model, including: performing high-dimensional feature extraction on data of each modality in sample data to obtain a first feature for the each modality; obtaining an intermediate loss function based on the first feature through dimensionality reduction, and obtaining second feature for the each modality through dimensionality restoration; obtaining a motion representation based on the second feature and a supplementary feature, by fusing features of different modalities; and processing the motion representation through a category encoder network and a boundary encoder network separately, to obtain an action category prediction vector and a temporal boundary prediction vector, and determining an action category prediction result and a prediction loss function, wherein parameters of the temporal action segmentation model are adjusted based on the intermediate loss function and the predicted loss function until training is completed.

In some embodiments, the obtaining the motion representation based on the second feature and the supplementary feature, by fusing the features of different modalities includes: obtaining an attention-enhanced motion stream feature and an attention-enhanced spatial stream feature based on the second feature and the supplementary feature; obtaining a cross-stream attention feature through a multi-head cross attention mechanism; obtaining a motion feature vector and a spatial feature vector based on the cross-stream attention feature, the attention-enhanced motion stream feature, and the attention-enhanced spatial stream feature; and determining the motion representation based on the motion feature vector and the spatial feature vector.

In some embodiments, the obtaining the intermediate loss function based on the first feature through dimensionality reduction and obtaining the second feature for the each modality through the dimensionality restoration includess: performing temporal encoding on the first feature, determining an intermediate category feature through a fully-connected layer, and determining an intermediate category loss function; performing the dimensionality restoration on the intermediate category feature and adding the dimensionality restored intermediate category feature to the first feature to obtain the second feature; and obtaining an intermediate boundary feature through dimensionality reduction and temporal information extraction performed on the second feature, and obtaining an intermediate boundary loss function based on the intermediate boundary feature, wherein the intermediate loss function includess the intermediate category loss function and the intermediate boundary loss function.

In some embodiments, the processing the motion representation through the category encoder network and the boundary encoder network to obtain the action category prediction vector and the temporal boundary prediction vector, and determining the action category prediction result includess: retrieving, at the beginning of the encoder network, a key-value pair feature vector in the boundary encoder network using a query feature vector in the category encoder network to obtain a boundary feature; retrieving, at the end of the encoder network, a key-value pair feature vector in the boundary encoder using a query feature vector in the boundary encoder network to obtain a category feature; obtaining the action category prediction vector and the temporal boundary prediction vector through dimensionality adjustment based on the boundary feature and the category feature; and filtering a boundary value based on a confidence score in the temporal boundary prediction vector, and adjusting the action category prediction vector according to the boundary value to obtain the action category prediction result.

In some embodiments, determining the prediction loss function includess: obtaining an action classification loss function corresponding to the action category prediction result; and obtaining a boundary probability vector based on the temporal boundary prediction vector, and determining a temporal boundary loss function based on the boundary probability vector, wherein the prediction loss function includess the action classification loss function and the temporal boundary loss function.

In some embodiments, the obtaining the attention-enhanced motion stream feature and the attention-enhanced spatial stream feature based on the second feature and the supplementary feature includess: obtaining an initial motion stream feature based on second feature from an inertial modality, obtaining an initial spatial stream feature based on a second feature from a keypoint modality and a second feature from a bounding box modality, wherein the modalities includess the inertia modality, the keypoint modality, and the bounding box modality; adding the initial motion stream feature and the initial spatial stream feature to the supplementary feature separately, to obtain an auxiliary enhanced motion stream feature and an auxiliary enhanced spatial stream feature; and obtaining the attention-enhanced motion stream feature and the attention-enhanced spatial stream feature based on the auxiliary enhanced motion stream feature and the supplementary feature by using the multi-head attention mechanism.

In some embodiments, the obtaining the motion feature vector and the spatial feature vector based on the cross-stream attention feature, the attention-enhanced motion stream feature, and the attention-enhanced spatial stream feature includess: processing a first cross-stream attention feature and the attention-enhanced motion stream feature through a frame-by-frame convolutional layer to obtain a third feature; processing a second cross-stream attention feature and the attention-enhanced spatial stream feature through a frame-by-frame convolutional layer to obtain a fourth feature; adding the third feature, the first cross-stream attention feature and the attention-enhanced motion stream feature to obtain the motion feature vector; and adding the fourth feature, the second cross-stream attention feature to the attention-enhanced spatial stream feature to obtain the spatial feature vector, wherein the first cross-stream attention feature is a cross-stream attention feature obtained by matching a query feature vector of the spatial stream with a key-value pair feature vector of the motion stream, and the second cross-stream attention feature is a cross-stream attention feature obtained by matching a query feature vector of the motion stream with a key-value pair feature vector of the spatial stream.

In some embodiments, the determining the motion representation based on the motion feature vector and the spatial feature vector includess: adding the motion feature vector and the spatial feature vector to form the motion representation.

In some embodiments, the obtaining the intermediate boundary feature through dimensionality reduction and temporal information extraction performed on the second feature, and obtaining the intermediate boundary loss function based on the intermediate boundary feature includess: processing the second feature through a one-layer convolutional neural network to obtain a fifth feature; obtaining temporal information of the fifth feature through a multilayer convolutional neural network with residual connections, and adding the temporal information to the fifth feature to determine the intermediate boundary feature; obtaining a boundary classification probability vector by applying an activation function to the intermediate boundary feature; and determining the intermediate boundary loss function based on the boundary classification probability vector.

In some embodiments, the training method further includes: obtaining a weighted sum of an intermediate category loss function, an intermediate boundary loss function, an action classification loss function, and a temporal boundary loss function as a loss function value, wherein parameters of the temporal action segmentation model are adjusted according to the loss function value, the intermediate loss function includess the intermediate category loss function and the intermediate boundary loss function, and the predicted loss function includess the action classification loss function and the temporal boundary loss function.

In some embodiments, the supplementary feature are determined based on an operation log of an IoT device.

According to an aspect of some embodiments of the present disclosure, there is provided a temporal action segmentation method, including: obtaining data of each of modalities and supplementary data of a target; inputting the data of each of modalities and the supplementary data into a temporal action segmentation model to obtain an action category prediction result for the target, wherein the temporal action segmentation model is generated based on any one of the training methods of a temporal action segmentation model described above.

In some embodiments, the method is characterized by at least one of: modalities including the inertia modality, the keypoint modality, and the bounding box modality; or the supplementary data including an operation log of an IoT device.

According to an aspect of some embodiments of the present disclosure, there is provided an training apparatus of a temporal action segmentation model, including: a feature extraction module configured to perform high-dimensional feature extraction on data of each modality in sample data to obtain a first feature for the each modality; a feature constraint module configured to obtain an intermediate loss function based on the first feature through dimensionality reduction, and obtain second feature for the each modality through dimensionality restoration; a fusion module configured to obtain a motion representation based on the second feature and supplementary feature, by fusing features of different modalities; and an interaction dual-branch module configured to process the motion representation through a category encoder network and a boundary encoder network to obtain an action category prediction vector and a temporal boundary prediction vector, and determine an action category prediction result and a prediction loss function, wherein parameters of the temporal action segmentation model are adjusted based on the intermediate loss function and the predicted loss function until training is completed.

In some embodiments, the training apparatus further includess: a loss value determination unit configured to obtain a weighted sum of the inner category loss function, the inner boundary loss function, the action classification loss function, and the temporal boundary loss function as a loss function value, wherein parameters of the temporal action segmentation model are adjusted according to the loss function value, the inner loss function includes the inner category loss function and the inner boundary loss function, and the predicted loss function includes the action classification loss function and the temporal boundary loss function.

According to an aspect of some embodiments of the present disclosure, there is provided a temporal action segmentation apparatus, including: a data acquisition module configured to obtain data of each modality and supplementary data of a target; and a prediction module configured to input the data of each modality and the supplementary data into a temporal action segmentation model to obtain an action category prediction result for the target, wherein the temporal action segmentation model is generated based on any one of the training methods of a temporal action segmentation model described above.

According to an aspect of some embodiments of the present disclosure, there is provided a data processing apparatus, including: a memory; and a processor coupled to the memory, the processor configured to perform any one of the methods described above based on instructions stored in the memory.

According to an aspect of some embodiments of the present disclosure, there is provided a computer-readable storage medium having stored thereon computer program instructions that, when executed by a processor, implement any of the methods described above.

According to an aspect of some embodiments of the present disclosure, there is provided a computer program product including computer programs or instructions that, when executed by a processor, implement any of the methods described above.

According to an aspect of some embodiments of the present disclosure, there is provided a computer program for causing a processor to execute any of the methods described above.

BRIEF DESCRIPTION OF THE DRAWINGS

The accompanying drawings described here are intended to provide a further understanding of the present disclosure and constitute a part of the present disclosure. The illustrative embodiments of the present disclosure as well as the descriptions thereof, which are intended for explaining the present disclosure, do not constitute improper definitions on the present disclosure. In the accompanying drawings:

Figure 1 is a flowchart illustrating some embodiments of a training method of a temporal action segmentation model according to the present disclosure;

Figure 2 is a flowchart illustrating some embodiments of modality information constraining in the training method of the temporal action segmentation model according to the present disclosure;

Figure 3 is a flowchart illustrating some embodiments of a feature fusion process in the training method of the temporal action segmentation model according to the present disclosure;

Figure 4 is a flowchart illustrating some embodiments of determining an action category prediction result in the training method of the temporal action segmentation model according to the present disclosure;

Figure 5 is a schematic diagram illustrating some embodiments of a temporal action segmentation model according to the present disclosure;

Figure 6 is a flowchart illustrating some embodiments of a temporal action segmentation method according to the present disclosure;

Figure 7 is a schematic diagram illustrating some embodiments of a training apparatus of a temporal action segmentation model according to the present disclosure;

Figure 8 is a schematic diagram illustrating some embodiments of a temporal action segmentation apparatus according to the present disclosure;

Figure 9 is a schematic diagram illustrating some embodiments of a data processing apparatus according to the present disclosure;

Figure 10 is a schematic diagram illustrating other embodiments of the data processing apparatus according to the present disclosure.

DETAILED DESCRIPTION

Below, the technical solution of the present disclosure will be further described in detail with reference to the accompanying drawings and embodiments.

Relevant temporal action segmentation techniques generally take the visual color information in videos as samples for feature extraction and model training, so as to extract action features for frame-level action category prediction, while adopting multi-stage adjustment or independent boundary branches to enhance the temporal relationships between actions. This approach is limited in its ability to represent and understand human actions due to its exclusive reliance on visual color information.

Multimodal action recognition technique refers to the process of fusing complementary information from data of multiple modalities to obtain a comprehensive representation of human actions, thereby enabling accurate action prediction. Related multimodal action recognition techniques typically adopt deep convolutional neural networks and Transformer structures, and train network models on large-scale annotated data, then obtain action recognition results by fusing information across modalities. The primary multimodal fusion methods in related technologies include: (1) Data-level fusion: aggregate multi-source data prior to input into feature learning networks; (2) Feature-level fusion: transform data of different modalities into high-dimensional feature representations before being fused. (3) Decision-level fusion: train individual classifiers based on data of each modality separately, followed by fusion of their prediction scores.

Relevant feature-level multimodal fusion methods primarily employ high-dimensional feature concatenation, summation, or attention mechanisms. However, these approaches cannot guarantee the quality of pre-fusion multimodal features, which may lead to the integration of irrelevant information and introduce noise. Moreover, the simplicity of these fusion strategies limits their capacity to fully exploit complementary information across modalities.

To address the above issues, this disclosure proposes a temporal action segmentation method and apparatus, a model training method and apparatus, and a storage medium, to improve the accuracy of action segmentation.

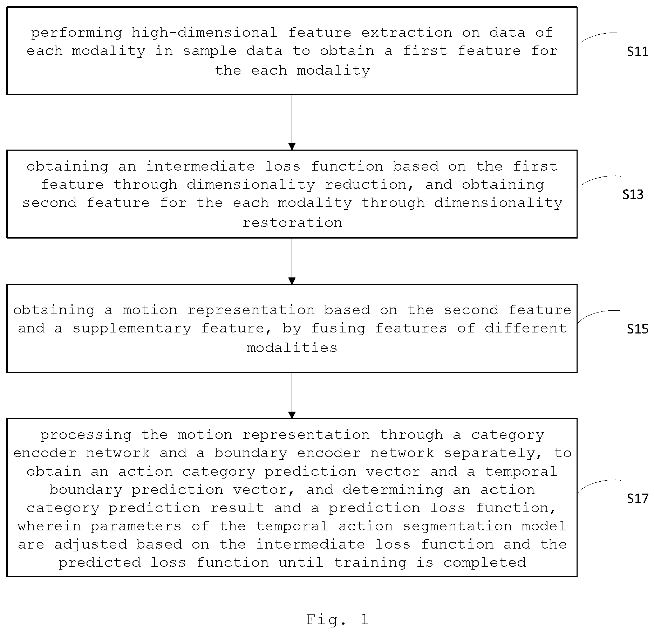

Figure 1 is a flowchart illustrating some embodiments of a method for training a temporal action segmentation model according to the present disclosure.

In step S11, high-dimensional feature extraction is performed on the data of each modality in sample data to obtain a first feature for the each modality. In some embodiments, each sample data includes multi-modal data obtained from multiple sources and devices for a processing object (such as a same person). In some embodiments, the sample data further includes action category labels corresponding to each frame.

In some embodiments, the above modalities may include inertial modality, keypoint modality, and bounding boxes modality, thereby avoiding the use and reliance on visual colors, which mitigates risks of exposing sensitive personal and environmental data and risks of privacy leakage, and enhancing system security.

In some embodiments, the feature extraction operation includes performing high-dimensional feature extraction separately on inertial data, keypoint data, and bounding box data to obtain first inertial features, first keypoint features, and first bounding box features, respectively. In some embodiments, an encoder can be configured for each modality's data to perform high-dimensional feature extraction. In some embodiments, a high-dimensional feature refer to feature with dimensions greater than or equal to a predetermined number, such as 1000 in some embodiments.

In some embodiments, first features are $L \times D$ dimensional features, where $L$ denotes the temporal length and $D$ represents the dimensionality of modality-specific features.

In step S13, based on the first features, an intermediate loss function is obtained through dimensionality reduction and second features are obtained for each modality through dimensionality restoration. By imposing constraints via the intermediate loss function, the information of each modality is separately constrained to improve the quality of features used in subsequent fusion stages, thereby reducing interfering information.

In some embodiments, the intermediate loss function includes an intermediate category loss function and an intermediate boundary loss function, thereby imposing dual constraints on the information of each modality from the perspectives of category and boundary, and improving the quality of feature optimization.

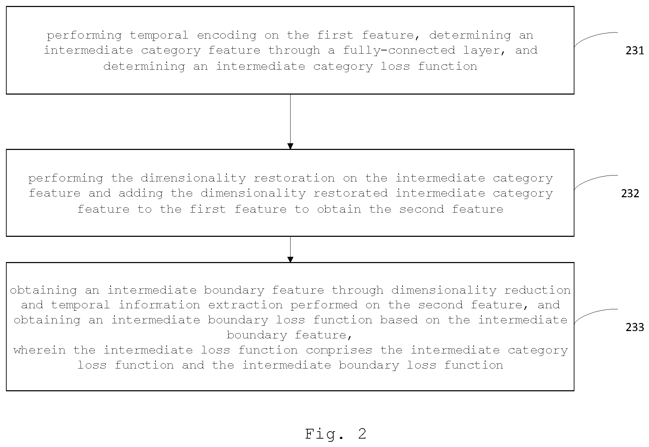

In some embodiments, the process of constraining information of modalities is shown in Figure 2.

In step 231, temporal encoding is performed on the first features via a Long Short-Term Memory (LSTM) network, followed by processing through a fully-connected layer to obtain an intermediate category feature and determine an intermediate category loss function.

In some embodiments, the dimensionality of the intermediate category feature is smaller than that of the first feature. In some embodiments, the intermediate category feature is $L \times C$ dimensional feature, where $C$ is the number of predicted action categories.

In some embodiments, an $L \times C$ dimensional classification probability vector is obtained via a Softmax operation, from which an intermediate category loss function is determined. In some embodiments, network parameters are optimized using stochastic gradient descent and backpropagation algorithms based on the intermediate category loss function.

In step 232, the dimensionality of the intermediate category feature is restored, the restored intermediate category feature then added to the first features to obtain a second feature. In some embodiments, a fully-connected neural network can be employed to restore the intermediate category feature from $L \times C$ to $L \times D$, and the restored intermediate category feature then add them to the first feature to obtain the second feature. In some embodiments, the features are summed in an element-wise manner. In this way, it is possible to avoid the loss of high-dimensional information caused by dimensionality reduction.

In step 233, the second feature is processed through dimensionality reduction and temporal information extraction to obtain an intermediate boundary feature, and an intermediate boundary loss function is obtained based on the intermediate boundary features.

In some embodiments, the second feature as input is processed through a convolutional neural network layer to generate a fifth feature. Further, a multi-layer convolutional neural network with residual connections is employed to extract temporal information of the fifth feature, which is then added to the fifth feature to determine the intermediate boundary feature.

In some embodiments, the intermediate boundary features are processed with an activation function to generate a boundary classification probability vector. The value in the vector is between 0-1, where values closer to 0 representing lower probability of a likelihood of the corresponding frame being an action temporal boundary, and those closer to 1 representing higher probability of a likelihood of the corresponding frame being an action temporal boundary. An intermediate boundary loss function is determined based on the boundary classification probability vector. In some embodiments, network parameters are optimized using stochastic gradient descent and backpropagation algorithms based on the intermediate category loss function.

In this way, by imposing constraints via the intermediate loss function, the information of each modality is separately constrained to improve the quality of features used in subsequent fusion stages, thereby reducing interfering information. Through dimensionality reduction followed by dimensionality restoration and addition with original feature, the loss of high-dimensional information caused by dimensionality reduction is prevented, thereby improving information completeness. Constraints are imposed on the information of each modality from the perspectives of category and boundary, thereby improving the quality of feature optimization.

In step S15, a motion representation is obtained by fusing the features from different modalities based on the second feature and a supplementary feature. In some embodiments, the supplementary feature may be a feature determined from temporally sparse information, while in some embodiments, the supplementary feature may be an feature related to specific action, such as those determined based on an operational log of an IoT device. In some embodiments, supplementary data can be obtained as data of an additional modality. In the above step S11, instead of performing high-dimensional feature extraction, supplementary data is processed through a fully-connected layer to obtain supplementary features.

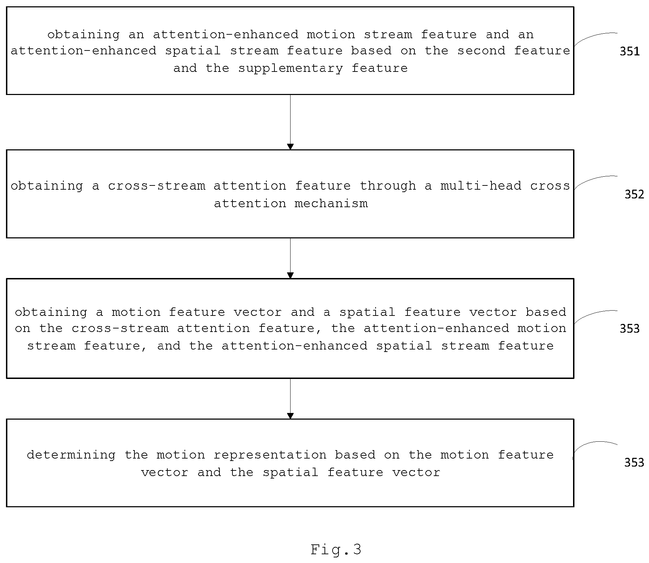

In some embodiments, the feature fusion process is shown in Figure 3.

In step 351, an attention-enhanced motion stream feature and an attention-enhanced spatial stream feature are obtained based on the second feature and the supplementary feature.

In some embodiments, the second features of different modalities can be integrated based on the characteristics of the modalities. For example, an initial motion stream feature can be obtained based on the second feature of the inertial modality, while an initial spatial stream feature can be obtained based on the second feature of the keypoint modality and the bounding box modality. Further operations are performed based on the integrated features. In this way, a reduction in subsequent computational workload can be achieved to improve data processing efficiency.

In some embodiments, the initial motion stream feature and the initial spatial stream feature are added to the supplementary feature separately, to obtain an auxiliary enhanced motion stream feature and an auxiliary enhanced spatial stream feature. In this way, supplementary feature information can be incorporated into the motion stream feature and the spatial stream feature, thereby increasing the amount of valid information carried by the auxiliary enhanced motion stream features and auxiliary enhanced spatial stream features, which is conducive to improving the accuracy of action segmentation.

In some embodiments, based on the auxiliary enhanced motion stream feature and the supplementary feature, a multi-head attention mechanism is utilized to obtain the attention-enhanced motion stream feature and the attention-enhanced spatial stream feature.

In step 352, a cross-stream attention feature is obtained through a multi-head cross attention mechanism.

In some embodiments, based on the attention-enhanced motion stream feature and attention-enhanced spatial stream feature obtained previously, a multi-head attention mechanism can be used to perform cross stream processing on these two types of features. For instance, a first cross-stream attention feature can be obtained by matching a query feature vector of the spatial stream with a key value pair feature vector of the motion stream, and a second cross-stream attention feature can be obtained by matching a query feature vector of the motion stream with a key value pair feature vector of the spatial stream. In some embodiments, the cross-stream attention feature includes a first cross-stream attention feature and a second cross-stream attention feature.

In step 353, a motion feature vector and a spatial feature vector are obtained based on the cross-stream attention feature, the attention-enhanced motion stream feature, and the attention-enhanced spatial stream feature.

In some embodiments, fine-grained action feature vectors can be obtained as the motion feature vector and the spatial feature vector, based on the cross-stream attention feature, the attention-enhanced motion stream feature, and the attention-enhanced spatial stream feature.

In some embodiments, a third feature is obtained by processing the first cross-stream attention feature and the attention-enhanced motion stream feature through a frame-by-frame convolutional layer; a fourth feature is obtained by processing the second cross-stream attention feature and the attention-enhanced spatial stream feature through a frame-by-frame convolutional layer; the third feature, the first cross-stream attention feature, and the attention-enhanced motion stream feature are summed to obtain a motion feature vector; the fourth feature, the second cross-stream attention feature, and the attention-enhanced spatial stream feature are summed to obtain a spatial feature vector. In this way, the motion feature vector includes first cross-stream attention feature and attention-enhanced motion stream feature processed by frame-by-frame convolution layer, as well as the original first cross-stream attention feature and attention-enhanced motion stream feature themselves. The spatial feature vector includes second cross-stream attention features and attention-enhanced spatial stream features processed frame-by-frame by convolution layer, as well as the original second cross-stream attention feature and the original attention-enhanced spatial stream feature themselves, thereby improving the comprehensiveness of information in the vector.

In step 354, a motion representation is determined based on the motion feature vector and spatial feature vector. In some embodiments, the motion feature vector is added to the spatial feature vector to form the motion representation. By combining fine-grained features in this way, the comprehensiveness and robustness of motion representation are improved.

With the method described in the above embodiments, it is possible to improve the fusion of information of different modalities based on attention mechanisms and supplementary information. Through encoding the interactive context between motion and spatial information of actions, a comprehensive action representation can be acquired. Moreover, it improves the fusion between motion stream information and spatial stream information, thereby enhancing the capacity to represent actions.

In step S17, the motion representation is processed through a category encoder network and a boundary encoder network separately, to obtain an action category prediction vector and a temporal boundary prediction vector, so as to determine an action category prediction result and a prediction loss function. In some embodiments, the prediction loss function may include an action classification loss function and a temporal boundary loss function, thereby constraining the model from both classification and boundary perspectives to improve the accuracy of the model.

In some embodiments, a classification probability vector can be obtained through a Softmax operation based on the action category prediction result to determine an action classification loss function. In some embodiments, stochastic gradient descent and backpropagation algorithms are used to optimize network parameters based on the action classification loss function.

In some embodiments, a boundary probability vector can be obtained through a Sigmoid operation based on the temporal boundary prediction vector, to determine a temporal boundary loss function. In some embodiments, stochastic gradient descent and backpropagation algorithms are used to optimize network parameters based on the temporal boundary loss function.

In some embodiments, parameters of the temporal action segmentation model are adjusted based on the intermediate loss function obtained in step S13 and the predicted loss function obtained in the current step, until training is completed.

In some embodiments, weights can be assigned to different loss functions as needed to balance the importance of those loss functions. In some embodiments, different weights can be assigned to the intermediate loss function and the prediction loss function, thereby balancing the influence of intermediate losses and final losses on the model.

In some embodiments, a weighted sum of the intermediate category loss function, the intermediate boundary loss function, the action classification loss function, and the temporal boundary loss function is obtained as a loss function value,

wherein parameters of the temporal action segmentation model are adjusted based on the loss function value, the intermediate loss function includes the intermediate category loss function and the intermediate boundary loss function, and the prediction loss function includes the action classification loss function and the temporal boundary loss function.

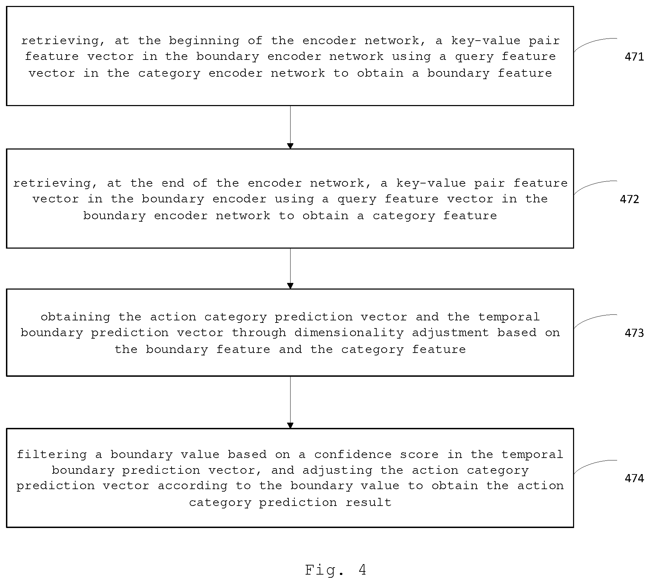

In some embodiments, a flowchart for determining the action category prediction result is shown in Figure 4.

In step 471, a query feature vector from a category encoder network is used at the beginning of an encoder network to retrieve a key value pair feature vector from a boundary encoder network, to obtain a boundary feature. In some embodiments, the encoder network includes a category encoder network and a boundary encoder network, which perform feature processing separately and in parallel. The beginning of the encoder network includes the beginning of the category encoder network and the beginning of the boundary encoder network.

In step 472, at the end of the encoder network, a query feature vector from the boundary encoder network is used to retrieve a key value pair feature vector from the boundary encoder to obtain a category feature. In some embodiments, the end of the encoder network includes the end of the category encoder network and the end of the boundary encoder network.

In step 473, based on the boundary feature and category feature, an action category prediction vector and a temporal boundary prediction vector are obtained through dimensionality adjustment. In some embodiments, the category feature can be adjusted from $L \times D$ dimensions to $L \times C$ dimensions via a fully-connected layer to obtain the action category prediction vector. In some embodiments, the boundary feature can be adjusted from $L \times D$ dimensions to $L \times 1$ dimensions via a fully-connected layer to obtain the temporal boundary prediction vector.

In step 474, boundary value is selected based on confidence score in the temporal boundary prediction vector, and the action category prediction vector is adjusted according to the boundary value to obtain an action category prediction result.

In some embodiments, a confidence threshold can be set, and boundary values with confidence scores higher than the confidence threshold in the temporal boundary prediction vector are selected, and fine tune the action category prediction vector using these boundary values to obtain an action category prediction result.

The method disclosed in the above embodiment can enhance temporal modeling capability through multi-stage interaction, thereby mitigating over-segmentation errors and improving action segmentation accuracy.

Based on the method described in the above embodiment, features can be extracted from multi-modal data to enhance the comprehensiveness of action representation. Constraints are applied to the information of each modality to enhance the quality of features used in subsequent fusion steps, enabling comprehensive integration of multi-modal features and improving the accuracy of action segmentation.

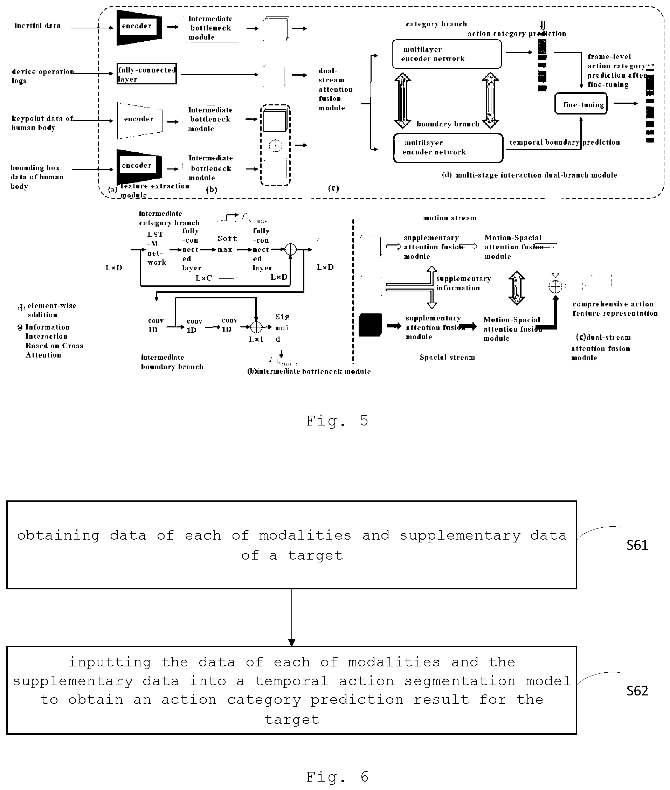

Figure 5 is a schematic diagram illustrating some embodiments of the temporal action segmentation model according to the present disclosure.

The temporal action segmentation model includes feature extraction modules, intermediate bottleneck modules, a dual-stream attention fusion module, and a multi-stage interaction dual-branch module.

1. Feature extraction module

In some embodiments, the number of feature extraction modules corresponds to the number of data sources or data classifications.

As shown in Figure 5 (a), different network structures are adopted based on the characteristics of data of different modalities.

In some embodiments, inertial data, human keypoint data and bounding box data contain rich information. A Transformer encoder structure $G(\cdot)$ is used for high-dimensional feature extraction to obtain first feature of each modality, denoted as $I_x = G(x)$, where $x$ represents any of inertial data, human keypoint data, and human bounding box data. The first features serve as the input for the intermediate bottleneck module.

In some embodiments, operation logs from IoT device exhibit temporal sparsity and are exclusively associated with specific action. Therefore, as supplementary data, these logs are processed through a simple fully-connected layer $C(\cdot)$ to generate supplementary feature $I_l = C(l)$, where $l$ denotes IoT operation log information.

2. Intermediate bottleneck module

In some embodiments, the number of feature extraction modules corresponds to the number of modalities associated with the first features.

Taking the first features $I$ of a modality as an example, $L \times D$ dimensional $I$ is used as input, where $L$ represents the temporal length and $D$ denotes the dimensionality of the modal feature. By reducing the feature dimensionality, an intermediate category loss $L_{c\ inner}$ and an intermediate boundary loss $L_{b\ inner}$ are computed. Enhanced modal features $I'$ are then obtained by increasing the feature dimensionality, which serve as the output of the intermediate bottleneck module. The intermediate bottleneck module includes an intermediate category branch and an intermediate boundary branch.

In some embodiments, the structure of the intermediate bottleneck module is shown in Figure 5 (b).

A. In the intermediate category branch, given first modal feature $I$ of $L \times D$ dimensions, input $I$ into the intermediate category branch. Temporal encoding is performed on $I$ using a Long Short-Term Memory network $g(\cdot)$, followed by processing through a fully-connected neural network $f(\cdot)$ to obtain intermediate category feature of $L \times C$, denoted as $I_c = f(g(I))$, where $C$ is the number of predicted action categories. Then, a $L \times C$ classification probability vector $s(I_c)$ is obtained through a softmax operation. In some embodiments, an intermediate category loss function is calculated according to the following formula (1).

$$L_{c\,inner} = \frac{1}{T}\sum_t -\log\big(s(I_c)_{c,t}\big) \qquad （1）$$

In some embodiments, stochastic gradient descent and backpropagation algorithms are used to optimize network parameters.

Furthermore, in the intermediate category branch, a fully-connected layer neural network $f(\cdot)$ is used to reshape the feature dimensions from $L \times C$ to $L \times D$. The calculated result is then added to the original feature input $I$, as shown in formula (2), to avoid the loss of high-dimensional information caused by dimensionality reduction.

$$I' = f(I_c) + I \qquad （2）$$

In formula (2), $I'$ is the output of the intermediate category branch and also the input of the intermediate boundary branch.

B. In the intermediate boundary branch, the intermediate boundary branch receives the output $I'$ of the intermediate category branch as its input, and adjusts the feature dimensions from $L \times D$ to $L \times 1$ through a one-layer convolutional neural network $p(\cdot)$, obtaining a feature vector $I_b = p(I')$. Then, the temporal information in the features is modeled using a multi-layer convolutional neural network $p'(\cdot)$ with residual connections, and intermediate boundary features are obtained according to formula (2).

$$I_b{'} = p'(I_b) + I_b \qquad （3）$$

A sigmoid operation is performed on the intermediate boundary features $I_b'$ to obtain an $L \times 1$ boundary classification probability vector $m(I_b')$, with values ranging from 0 to 1. Given a frame's boundary classification probability vector, values closer to 0 indicate a lower probability of the frame being an action temporal boundary, while values closer to 1 indicates a higher probability of the frame being an action temporal boundary. An intermediate boundary loss function is calculated according to formula (4).

$$L_{b\,inner} = \frac{1}{T}\sum_t^T\big(y_t \cdot \log\big(m(I_b')\big) + (1 - y_t) \cdot \log\big(1 - m(I_b')\big)\big) \qquad （4）$$

In the above formula, $y_t$ is the ground truth boundary value at time $t$. In some embodiments, stochastic gradient descent and backpropagation algorithms are used to optimize network parameters.

3. Dual-stream attention fusion module

The dual-stream attention fusion module takes the enhanced modal features $I'$ obtained through the intermediate bottleneck module as its input to obtain comprehensive human action features $I_F$. The dual-stream attention fusion module consists of supplementary attention fusion modules and motion spatial attention fusion modules.

The structure of the dual-stream attention fusion module is shown in Figure 5 (c), which includes a motion-spatial attention fusion module and a motion-spatial attention fusion module.

A. Supplementary attention fusion module

Feature vectors corresponding to inertial data, human keypoint data, human bounding box data, and operation logs from IoT devices are obtained through the aforementioned feature extraction modules and intermediate bottleneck modules. Accurate representations from operation log of IoT device are used as supplementary feature $I_L$. The second features from the inertial modality serve as motion stream feature $I_M$ of the human body. In addition, the second features from the keypoint modality and the bounding box modality are summed to form spatial stream feature $I_S$.

In some embodiments, the supplementary feature $I_L$ are added to the motion stream feature $I_M$ and the spatial stream feature $I_S$ separately, to obtain auxiliary enhanced feature vectors $I_{M+L}$ and $I_{S+L}$.

The auxiliary enhanced feature vectors and the supplementary feature are fed into a multi-head attention layer, and the following formulas (5) and (6) are used to generate attention-enhanced feature vectors $I_{M+L}$' and $I_{S+L}$':

$$I_{M+L}' = softmax\left(\frac{Q_L K_{M+L}^T}{\sqrt{d}}\right) V_{M+L} + I_{M+L} \qquad (5)$$

$$I_{S+L}' = softmax\left(\frac{Q_L K_{S+L}^T}{\sqrt{d}}\right) V_{S+L} + I_{S+L} \qquad (6)$$

In the above formulas, $d$ is a normalization constant, and $T$ represents matrix transposition. The auxiliary enhanced feature vectors provide the key $K$ and the value $V$, while the supplementary features provide the query $Q$.

B. Motion-Spacial attention fusion module

The motion feature and spatial stream feature are modeled through a multi-head cross-attention mechanism. The query feature vector $Q$ of a stream is used to match key-value pair feature vectors $K$ and $V$ of another stream according to the following formulas (7) and (8) :

$$I_{M \to S} = softmax\left(\frac{Q_S K_M^T}{\sqrt{d}}\right) V_M \qquad (7)$$

$$I_{S \to M} = softmax\left(\frac{Q_M K_S^T}{\sqrt{d}}\right) V_S \qquad (8)$$

In the above formulas, $I_{M \to S}$ and $I_{S \to M}$ represent cross-stream attention features encoding correlations between motion stream and spatial stream.

The cross-stream attention features are transformed into fine-grained action feature vectors via a frame-by-frame convolution layer $c(\cdot)$, known as motion feature vector $I_{M \to S}$' and spatial feature vector $I_{S \to M}$'. In some embodiments, the motion feature vector $I_{M \to S}$' and the spatial feature vector $I_{S \to M}$' can be determined according to formulas (9) and (10).

$$I_{M \to S}' = c(I_{M \to S} + I_{M+L}') + I_{M \to S} + I_{M+L}' \qquad (9)$$

$$I_{S \to M}' = c(I_{S \to M} + I_{S+L}') + I_{S \to M} + I_{S+L}' \qquad (10)$$

Through the supplementary attention fusion module and the motion-spacial attention fusion module, supplementary information is effectively embedded while enabling full interaction between motion and spatial stream information.

In some embodiments, the motion feature vector $I_{M \to S}$' and the spatial feature vector $I_{S \to M}$' are combined by element-wise addition, as shown in formula (11), to obtain a comprehensive and robust motion representation.

$$I_F = I_{M \to S}' + I_{S \to M}' \qquad (11)$$

4. Multi-stage interaction dual-branch module

The multi-stage interaction dual-branch module includes a category branch and a boundary branch. The motion representation $I_F$ is fed to the two branches separately. Each branch consists of multiple Transformer encoder layers.

A first-stage information interaction occurs at the start of the motion branch, where a query feature vector $Q_C$ from the category branch is used to retrieve key-value pair vectors $K_B, V_B$ obtained from the boundary branch. Boundary features obtained after the first information interaction via multi-head cross attention is $F_B = softmax(\frac{Q_C K_B^T}{\sqrt{d}}) V_B$ .

A second-stage information interaction occurs at the end of the two branches, where the boundary branch provides a query feature vector $Q_B'$, and the category branch provides key and value feature vectors $K_C', V_C'$. Category features after the second information interaction obtained via multi-head cross-attention is

$$F_C = softmax(\frac{Q_B' K_C'^{T}}{\sqrt{d}})V_C' \cdot$$

At the end of the category branch, feature is adjusted from $L \times D$ to $L \times C$ via a fully-connected layer to obtain an action category prediction vector $X_C$ for each frame. At the end of the boundary branch, feature is adjusted from of $L \times D$ to $L \times 1$ via a fully-connected layer to obtain a temporal boundary prediction vector $X_B$. A threshold a is set first to a filter boundary value $\hat{X}_B = \max (X_B, a)$, with high confidence scores from $X_B$

$$\hat{x}_C = \frac{X_C + \sum_{s\in\{-1,1\}} \sum_{\beta=1}^{L} \hat{x}_{B\,t+s\cdot\beta} \exp\left(-k \sum_{j=1}^{\beta} \hat{x}_{B\,t+s\cdot j}\right)}{1 + \sum_{s\in\{-1,1\}} \sum_{\beta}^{L} \exp\left(-k \sum_{j=1}^{\beta} \hat{x}_{B\,t+s\cdot j}\right)} \qquad (12)$$

In the above formula, $k$ controls the decay rate of weights, $L$ is the temporal length of the segment, and s E {-1,1} indicates the aggregation of feature vectors in both forward and backward directions during the weighting process. The obtained $\hat{x}_C$ is the final output result of the network, which is the frame level action category prediction result refined by temporal boundary constraints.

In some embodiments, a $L \times C$ classification probability vector $s(\hat{x}_C)$ is obtained via a softmax operation, and an action classification loss function is calculated according to formula (13) .

$$L_{c\,final} = \frac{1}{L} \sum_{t=1}^{L} -\log\big(s(\hat{x}_C)_{c,t}\big) \qquad (13)$$

In some embodiments, stochastic gradient descent and backpropagation algorithms are used to optimize network parameters.

In some embodiments, an $L \times 1$ boundary probability vector $m(X_B)$ is obtained via a sigmoid operation, and a temporal boundary loss function is calculated according to formula (14):

$$L_{b\,final} = \frac{1}{L} \sum_{t=1}^{L} \big(y_t \cdot \log\big(m(X_B)\big) + (1 - y_t) \cdot \log\big(1 - m(X_B)\big)\big) \qquad (14)$$

In some embodiments, $y_t$ is the ground truth boundary value at time $t$. In some embodiments, stochastic gradient descent and backpropagation algorithms are used to optimize network parameters.

Based on the training method of a temporal action segmentation model described above, based on the temporal action segmentation model described above, features of multi-modal data are extracted through the feature extraction module and the intermediate bottleneck module. The multi-modal features are fully fused through a dual-stream attention fusion module to obtain a comprehensive and robust representation of human actions. The information interaction between action categories and temporal boundaries is modeled through the multi-stage interaction dual-branch module to enhance the temporal modeling capability of the network, thereby achieving accurate temporal action segmentation results. The method of introducing category aware and temporal aware capabilities for each modal feature, by calculating an intermediate category loss and an intermediate boundary loss, provides the most effective information for subsequent feature fusion. By using a multi-stage modal fusion method based on attention mechanisms, auxiliary information is incorporated to facilitate full fusion and interaction between motion and spatial streams. The relationships among various information components are modeled using attention mechanisms, thereby enhancing the representational capacity for actions. By using a category-boundary multi-stage information interaction method, the contextual relationship between action categories and temporal boundaries is characterized, which improves the ability of temporal modeling and effectively improves the problem of over segmentation.

In some embodiments, during the training process, sample data is collected, which includes multi-modal data for a time period and corresponding action category labels for each frame. The multi-modal data and labels are traversed sequentially. The multi-modal data from the sample data is into a feature extraction module to obtain an intermediate loss function and a prediction loss function during the training process. Based on the loss functions, stochastic gradient descent and backpropagation algorithms are used to optimize the network parameters.

In some embodiments, the multi-modal fusion temporal action segmentation model is implemented as an end-to-end network where all modules are trained simultaneously. In some embodiments, the model generates four loss functions during training: an intermediate category loss function $L_{c\,inner}$, an intermediate boundary loss function $L_{b\,inner}$, an action classification loss function $L_{c\,final}$, and a temporal boundary loss function $L_{b\,final}$, which are summed according to formula (15).

$$L = \lambda_1 L_{c\,inner} + (1 - \lambda_1)L_{c\,final} + \lambda_2(L_{b\,inner} + L_{b\,final}) \qquad （15）$$

In the above formula, $\lambda_1$ and $\lambda_2$ are weighting coefficients. $\lambda_1$ balances the intermediate and final losses, while $\lambda_2$ balances the action category loss and the temporal boundary loss. The overall network parameters are then optimized using stochastic gradient descent algorithm.

In this way, the intermediate and final losses, as well as the action category loss and temporal boundary loss, can be balanced as needed, thereby enhancing the controllability of the model.

Figure 6 is a flowchart illustrating some embodiments of the temporal action segmentation method according to the present disclosure.

In step S61, data of each of modalities and supplementary data are obtained for a target. In some embodiments, the modalities include inertia modality, keypoint modality, and bounding box modality. In some embodiments, the supplementary data includes an operation log of an IoT device.

In step S62, the data of each modality and the supplementary data are input into a temporal action segmentation model to obtain a predicted action category for the target. In some embodiments, the temporal action segmentation model is generated based on any of the training methods of the temporal action segmentation model described above. In some embodiments, the temporal action segmentation model is shown in Figure 5.

Based on the method described in the above embodiments, it is possible to extract features from multi-modal data, impose constraints separately on the information of each modality to enhance the quality of the features utilized in subsequent fusion steps, fully integrate multi-modal features, and thereby improve the accuracy of action segmentation.

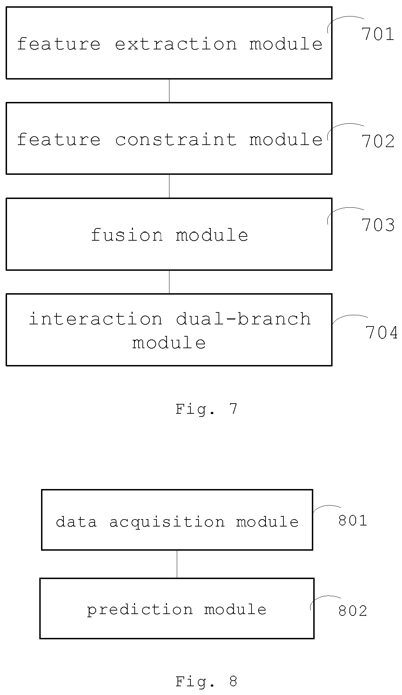

Figure 7 is a schematic diagram illustrating some embodiments of a training apparatus of a temporal action segmentation model according to the present disclosure.

A feature extraction module 701 can perform high-dimensional feature extraction on data of each modality in the sample data to obtain first features of each modality. In some embodiments, the feature extraction module 701 can perform step S11 mentioned above, as well as any method performed by the feature extraction module in the corresponding embodiment of Figure 5.

A feature constraint module 702 can obtain an intermediate loss function based on the first features through dimensionality reduction, and obtain second features for each modality through dimensionality restoration. In some embodiments, parameters of the temporal action segmentation model are adjusted based on the intermediate loss function until training is completed. In some embodiments, the feature constraint module 702 can perform step S13 illustrated in the embodiment shown in Figure 2, as well as any method performed by the intermediate bottleneck module in the corresponding embodiment of Figure 5.

A fusion module 703 can obtain a motion representation based on the second features and supplementary features by fusing the features of different modalities. In some embodiments, the fusion module 703 can perform step S15 illustrated in the embodiment shown in Figure 3, as well as any method performed by the dual-stream attention fusion module in the corresponding embodiment of Figure 5.

An interaction dual-branch module 704 can process the motion representation through a category encoder network and a boundary encoder network to obtain an action category prediction vector and a temporal boundary prediction vector, determine an action category prediction result and a prediction loss function. In some embodiments, parameters of the temporal action segmentation model are adjusted based on the prediction loss function until training is completed. In some embodiments, the interaction dual-branch module 704 can perform step S17 illustrated in the embodiment shown in Figure 4, as well as any method performed by the multi-stage interaction dual-branch module in the corresponding embodiment of Figure 5.

This training apparatus can extract features from multi-modal data, impose constraints separately on the information of each modality to enhance the quality of the features utilized in subsequent fusion steps, fully integrate multi-modal features, and thereby improve the accuracy of action segmentation.

In some embodiments, the training apparatus further includes a loss value determination unit that can obtain a weighted sum of the intermediate category loss function, the intermediate boundary loss function, the action classification loss function, and the temporal boundary loss function to form a loss function value. In some embodiments, parameters of the temporal action segmentation model are adjusted based on the loss function value, the intermediate loss function includes the intermediate category loss function and the intermediate boundary loss function, and the prediction loss function includes the action classification loss function and the temporal boundary loss function. In some embodiments, weight adjustment can be performed as needed.

With this training apparatus, the intermediate and final losses, as well as the action category loss and temporal boundary loss, can be balanced as needed, thereby enhancing the controllability of the model.

Figure 8 is a schematic diagram illustrating some embodiments of the temporal action segmentation apparatus according to the present disclosure.

A data acquisition module 801 can obtain data of each of modalities and supplementary data of a target.

A prediction module 802 inputs the data of each modality and the supplementary data into a temporal action segmentation model to obtain an action category prediction result for the target. The temporal action segmentation model can be any of those mentioned above, trained using any training method of a temporal action segmentation model as mentioned above, or generated through training with any training apparatus of a temporal action segmentation model as mentioned above.

This apparatus can extract features from multi-modal data, impose constraints separately on the information of each modality to enhance the quality of the features utilized in subsequent fusion steps, fully integrate multi-modal features, and thereby improve the accuracy of action segmentation.

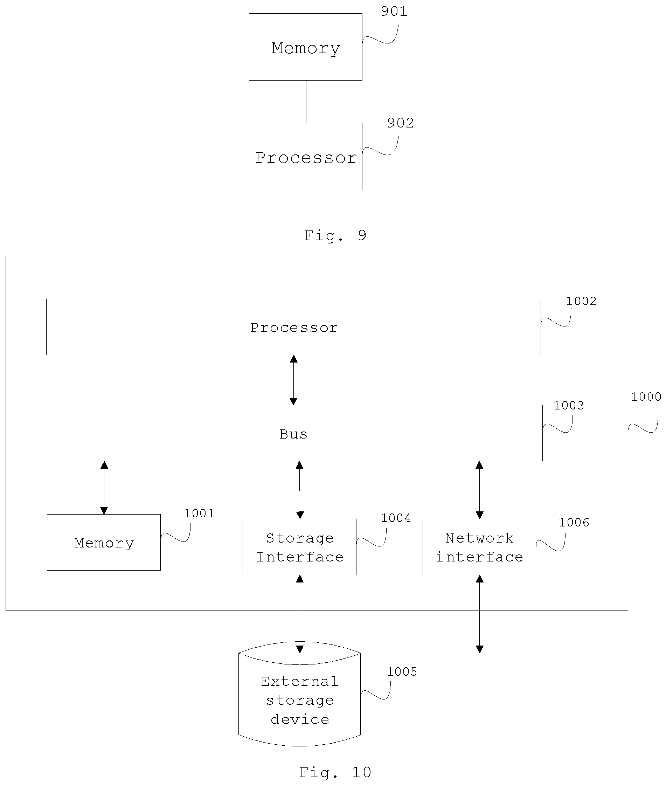

FIG. 9 is a schematic structure diagram of a data processing apparatus according to an embodiment of the present disclosure. The data processing apparatus includes a memory 901 and a processor 902. wherein the memory 901 may be a magnetic disk, flash memory or any other non-volatile storage medium. The memory is used to store the instructions of training method of a temporal action segmentation model or the temporal action segmentation method of the corresponding embodiments described above. The processor 902 is coupled to memory 901 and may be implemented as one or more integrated circuits, such as a microprocessor or microcontroller. The processor 902 is used to execute the instructions stored in the memory and can improve the accuracy of action segmentation.

In some embodiments, as illustrated in Figure 10, the data processing apparatus 1000 includes a memory 1001 and a processor 1002. The processor 1002 is coupled to the memory 1001 via a bus 1003. The data processing apparatus 1000 may be further connected to an external storage device 1005 through a storage interface 1004 to access external data, and may be further connected to a network or another computer system (not shown) through a network interface 1006, the details of which will not described herein.

In the above embodiment, through storing data instructions in memory and processing the above instructions using a processor, the accuracy of action segmentation can be improved.

In another an embodiment, there is provided a computer readable storage medium having stored thereon computer program instructions that, when executed by a processor, implement the steps of the training method of a temporal action segmentation model or the temporal action segmentation method of the corresponding embodiments described above. One skilled in the art should understand that, the embodiments of the present disclosure may be provided as a method, an apparatus, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (including but not limited to disk storage, CD-ROM, optical storage device, etc.) having computer-usable program code embodied therein.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

Heretofore, the present disclosure has been described in detail. In order to avoid obscuring the concepts of the present disclosure, some details known in the art are not described. Based on the above description, those skilled in the art can understand how to implement the technical solutions disclosed herein.

The method and apparatus of the present disclosure may be implemented in many ways. For example, the method and apparatus of the present disclosure may be implemented by software, hardware, firmware, or any combination of software, hardware, and firmware. The above sequence of steps of the method is merely for the purpose of illustration, and the steps of the method of the present disclosure are not limited to the above-described specific order unless otherwise specified. In addition, in some embodiments, the present disclosure may also be implemented as programs recorded in a recording medium, which include machine-readable instructions for implementing the method according to the present disclosure. Thus, the present disclosure also covers a recording medium storing programs for executing the method according to the present disclosure.

It should be noted that the terms "first", "second" and the like in the description and claims of the present disclosure and the drawings are used to distinguish similar objects, and are not necessarily used to describe a specific order or sequence. It should be understood that the terms so used may be interchanged where appropriate so that the embodiments of the disclosure described herein can be implemented in an order other than those illustrated or described herein. Furthermore, the terms "including" and "having" and any of their variations are intended to cover non-exclusive inclusions, for example, a process, method, system, product, or device that includes a series of steps or units need not be limited to those explicitly listed, instead it can include other steps or units not explicitly listed or inherent to this process, method, product or device.

It shall be noted that: the above embodiments are merely illustration of the technical solution of this disclosure, but are not limitation thereof. Although the present disclosure has been described in detail with preferred embodiments, those ordinary skilled in the art shall understand: embodiments of the present disclosure may be modified or some technical features thereof may be substituted equivalently, without departing from the spirit of the technical solution of the present disclosure, all of which shall be encompassed in the scope of the technical solution as claimed in the present disclosure.

## Claims

1. A training method of a temporal action segmentation model, comprising:

   performing high-dimensional feature extraction on data of each modality in sample data to obtain a first feature for the each modality;
   obtaining an intermediate loss function based on the first feature through dimensionality reduction, and obtaining second feature for the each modality through dimensionality restoration;
   obtaining a motion representation based on the second feature and a supplementary feature, by fusing features of different modalities; and
   processing the motion representation through a category encoder network and a boundary encoder network separately, to obtain an action category prediction vector and a temporal boundary prediction vector, and determining an action category prediction result and a prediction loss function,
   wherein parameters of the temporal action segmentation model are adjusted based on the intermediate loss function and the predicted loss function until training is completed.

2. The training method according to claim 1, wherein the obtaining the motion representation based on the second feature and the supplementary feature, by fusing the features of different modalities comprises:

   obtaining an attention-enhanced motion stream feature and an attention-enhanced spatial stream feature based on the second feature and the supplementary feature;
   obtaining a cross-stream attention feature through a multi-head cross attention mechanism;
   obtaining a motion feature vector and a spatial feature vector based on the cross-stream attention feature, the attention-enhanced motion stream feature, and the attention-enhanced spatial stream feature; and
   determining the motion representation based on the motion feature vector and the spatial feature vector.

3. The training method according to claim 1 or 2, wherein the obtaining the intermediate loss function based on the first feature through dimensionality reduction and obtaining the second feature for the each modality through the dimensionality restoration comprises:

   performing temporal encoding on the first feature, determining an intermediate category feature through a fully-connected layer, and determining an intermediate category loss function;
   performing the dimensionality restoration on the intermediate category feature and adding the dimensionality restored intermediate category feature to the first feature to obtain the second feature; and
   obtaining an intermediate boundary feature through dimensionality reduction and temporal information extraction performed on the second feature, and obtaining an intermediate boundary loss function based on the intermediate boundary feature,
   wherein the intermediate loss function comprises the intermediate category loss function and the intermediate boundary loss function.

4. The training method according to any one of claims 1 to 3, wherein the processing the motion representation through the category encoder network and the boundary encoder network to obtain the action category prediction vector and the temporal boundary prediction vector, and determining the action category prediction result comprises:

retrieving, at the beginning of the encoder network, a key-value pair feature vector in the boundary encoder network using a query feature vector in the category encoder network to obtain a boundary feature;
retrieving, at the end of the encoder network, a key-value pair feature vector in the boundary encoder using a query feature vector in the boundary encoder network to obtain a category feature;
obtaining the action category prediction vector and the temporal boundary prediction vector through dimensionality adjustment based on the boundary feature and the category feature; and
filtering a boundary value based on a confidence score in the temporal boundary prediction vector, and adjusting the action category prediction vector according to the boundary value to obtain the action category prediction result.

5. The training method according to any one of claims 1 to 4, wherein determining the prediction loss function comprises:

obtaining an action classification loss function corresponding to the action category prediction result; and
obtaining a boundary probability vector based on the temporal boundary prediction vector, and determining a temporal boundary loss function based on the boundary probability vector,
wherein the prediction loss function comprises the action classification loss function and the temporal boundary loss function.

6. The training method according to claim 2, wherein the obtaining the attention-enhanced motion stream feature and the attention-enhanced spatial stream feature based on the second feature and the supplementary feature comprises:

obtaining an initial motion stream feature based on second feature from an inertial modality, obtaining an initial spatial stream feature based on a second feature from a keypoint modality and a second feature from a bounding box modality, wherein the modalities comprises the inertia modality, the keypoint modality, and the bounding box modality;
adding the initial motion stream feature and the initial spatial stream feature to the supplementary feature separately, to obtain an auxiliary enhanced motion stream feature and an auxiliary enhanced spatial stream feature; and
obtaining the attention-enhanced motion stream feature and the attention-enhanced spatial stream feature based on the auxiliary enhanced motion stream feature and the supplementary feature by using the multi-head attention mechanism.

7. The training method according to claim 2 or 6, wherein the obtaining the motion feature vector and the spatial feature vector based on the cross-stream attention feature, the attention-enhanced motion stream feature, and the attention-enhanced spatial stream feature comprises:

processing a first cross-stream attention feature and the attention-enhanced motion stream feature through a frame-by-frame convolutional layer to obtain a third feature;
processing a second cross-stream attention feature and the attention-enhanced spatial stream feature through a frame-by-frame convolutional layer to obtain a fourth feature;
adding the third feature, the first cross-stream attention feature and the attention-enhanced motion stream feature to obtain the motion feature vector; and
adding the fourth feature, the second cross-stream attention feature to the attention-enhanced spatial stream feature to obtain the spatial feature vector,
wherein the first cross-stream attention feature is a cross-stream attention feature obtained by matching a query feature vector of the spatial stream with a key-value pair feature vector of the motion stream, and the second cross-stream attention feature is a cross-stream attention feature obtained by matching a query feature vector of the motion stream with a key-value pair feature vector of the spatial stream.

8. The training method according to claim 2, 6 or 7, wherein the determining the motion representation based on the motion feature vector and the spatial feature vector comprises:
adding the motion feature vector and the spatial feature vector to form the motion representation.

9. The training method according to claim 3, wherein the obtaining the intermediate boundary feature through dimensionality reduction and temporal information extraction performed on the second feature, and obtaining the intermediate boundary loss function based on the intermediate boundary feature comprises:

processing the second feature through a one-layer convolutional neural network to obtain a fifth feature;
obtaining temporal information of the fifth feature through a multilayer convolutional neural network with residual connections, and adding the temporal information to the fifth feature to determine the intermediate boundary feature;
obtaining a boundary classification probability vector by applying an activation function to the intermediate boundary feature; and
determining the intermediate boundary loss function based on the boundary classification probability vector.

10. The training method according to any one of claims 1 to 9, further comprising:

obtaining a weighted sum of an intermediate category loss function, an intermediate boundary loss function, an action classification loss function, and a temporal boundary loss function as a loss function value,
wherein parameters of the temporal action segmentation model are adjusted according to the loss function value, the intermediate loss function comprises the intermediate category loss function and the intermediate boundary loss function, and the predicted loss function comprises the action classification loss function and the temporal boundary loss function.

11. The training method according to any one of claims 1 to 9, wherein the supplementary feature are determined based on an operation log of an IoT device.

12. A temporal action segmentation method, comprising:

obtaining data of each of modalities and supplementary data of a target;
inputting the data of each of modalities and the supplementary data into a temporal action segmentation model to obtain an action category prediction result for the target, wherein the temporal action segmentation model is generated based on the training method of a temporal action segmentation model according to any one of claims 1 to 11.

13. The temporal action segmentation method according to claim 12, wherein the temporal action segmentation method meets at least one of:

modalities comprising the inertia modality, the keypoint modality, and the bounding box modality; or
the supplementary data comprising an operation log of an IoT device.

14. A training apparatus of a temporal action segmentation model, comprising:

a feature extraction module configured to perform high-dimensional feature extraction on data of each modality in sample data to obtain a first feature for the each modality;
a feature constraint module configured to obtain an intermediate loss function based on the first feature through dimensionality reduction, and obtain second feature for the each modality through dimensionality restoration;
a fusion module configured to obtain a motion representation based on the second feature and supplementary feature, by fusing features of different modalities; and
an interaction dual-branch module configured to process the motion representation through a category encoder network and a boundary encoder network to obtain an action category prediction vector and a temporal boundary prediction vector, and determine an action category prediction result and a prediction loss function,
wherein parameters of the temporal action segmentation model are adjusted based on the intermediate loss function and the predicted loss function until training is completed.

15. A temporal action segmentation apparatus, comprising:

a data acquisition module configured to obtain data of each modality and supplementary data of a target; and
a prediction module configured to input the data of each modality and the supplementary data into a temporal action segmentation model to obtain an action category prediction result for the target, wherein the temporal action segmentation model is generated based on the training method of a temporal action segmentation model according to any one of claims 1 to 11.

16. A data processing apparatus, comprising:

   a memory; and
   a processor coupled to the memory, wherein the processor is configured to perform the method according to any of claims 1 to 13 based on instructions stored in the memory.

17. A computer-readable storage medium having computer program instructions stored thereon that, when executed by a processor, implement the steps of the method according to any of claims 1 to 13.

18. A computer program product comprising a computer program or instructions that, when executed by a processor, implement the method of any one of claims 1 to 13.

19. A computer program for causing a processor to perform the method according to any one of claims 1 to 13.

performing high-dimensional feature extraction on data of each modality in sample data to obtain a first feature for the each modality ⎯ S11

obtaining an intermediate loss function based on the first feature through dimensionality reduction, and obtaining second feature for the each modality through dimensionality restoration ⎯ S13

obtaining a motion representation based on the second feature and a supplementary feature, by fusing features of different modalities ⎯ S15

processing the motion representation through a category encoder network and a boundary encoder network separately, to obtain an action category prediction vector and a temporal boundary prediction vector, and determining an action category prediction result and a prediction loss function, wherein parameters of the temporal action segmentation model are adjusted based on the intermediate loss function and the predicted loss function until training is completed ⎯ S17

Fig. 1

performing temporal encoding on the first feature, determining an intermediate category feature through a fully-connected layer, and determining an intermediate category loss function

231

performing the dimensionality restoration on the intermediate category feature and adding the dimensionality restorated intermediate category feature to the first feature to obtain the second feature

232

obtaining an intermediate boundary feature through dimensionality reduction and temporal information extraction performed on the second feature, and obtaining an intermediate boundary loss function based on the intermediate boundary feature, wherein the intermediate loss function comprises the intermediate category loss function and the intermediate boundary loss function

233

Fig. 2

obtaining an attention-enhanced motion stream feature and an attention-enhanced spatial stream feature based on the second feature and the supplementary feature

351

obtaining a cross-stream attention feature through a multi-head cross attention mechanism

352

obtaining a motion feature vector and a spatial feature vector based on the cross-stream attention feature, the attention-enhanced motion stream feature, and the attention-enhanced spatial stream feature

353

determining the motion representation based on the motion feature vector and the spatial feature vector

353

Fig.3

retrieving, at the beginning of the encoder network, a key-value pair feature vector in the boundary encoder network using a query feature vector in the category encoder network to obtain a boundary feature    471

retrieving, at the end of the encoder network, a key-value pair feature vector in the boundary encoder using a query feature vector in the boundary encoder network to obtain a category feature    472

obtaining the action category prediction vector and the temporal boundary prediction vector through dimensionality adjustment based on the boundary feature and the category feature    473

filtering a boundary value based on a confidence score in the temporal boundary prediction vector, and adjusting the action category prediction vector according to the boundary value to obtain the action category prediction result    474

Fig. 4

inertial data → encoder → Intermediate bottleneck module →

device operation logs → fully-connected layer →

keypoint data of human body → encoder → Intermediate bottleneck module →

bounding box data of human body → encoder → Intermediate bottleneck module →

(a) feature extraction module

(b)

dual-stream attention fusion module

(c)

category branch
multilayer encoder network → action category prediction

boundary branch
multilayer encoder network → temporal boundary prediction

fine-tuning → frame-level action category prediction after fine-tuning

(d) multi-stage interaction dual-branch module

intermediate category branch
LST-M net-work → fully-connected layer → Soft max → fully-connected layer → ⊕ →
L×D    L×C    L×D    L×D

conv 1D → conv 1D → conv 1D → ⊕ → Sig moi d
L×1

intermediate boundary branch

(b)intermediate bottleneck module

⊕ element-wise addition

⊗ Information Interaction Based on Cross-Attention

motion stream
supplementary attention fusion module → Motion-Spacial attention fusion module →
supplementary information
supplementary attention fusion module → Motion-Spacial attention fusion module →
Spacial stream

comprehensive action feature representation

(c)dual-stream attention fusion module

Fig. 5

obtaining data of each of modalities and supplementary data of a target — S61

inputting the data of each of modalities and the supplementary data into a temporal action segmentation model to obtain an action category prediction result for the target — S62

Fig. 6

22

feature extraction module 701

feature constraint module 702

fusion module 703

interaction dual-branch module 704

Fig. 7

data acquisition module 801

prediction module 802

Fig. 8

Memory 901

Processor 902

Fig. 9

Processor 1002

Bus 1003

1000

Memory 1001

Storage Interface 1004

Network interface 1006

External storage device 1005

Fig. 10

## INTERNATIONAL SEARCH REPORT

| | |
|---|---|
| International application No. |
| **PCT/CN2025/071813** |

### A. CLASSIFICATION OF SUBJECT MATTER

G06V 20/40(2022.01)i

According to International Patent Classification (IPC) or to both national classification and IPC

### B. FIELDS SEARCHED

Minimum documentation searched (classification system followed by classification symbols)

IPC: G06V, G06F

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, IEEE: 时序动作分割, 模态, 特征, 提取, 高维, 降维, 融合, 模型, 训练, 动作, 类别, time sequence action segmentation, mode, modality, feature, extraction, high dimensional, dimension reduction, fusion, model, training, action, class

### C. DOCUMENTS CONSIDERED TO BE RELEVANT

| Category* | Citation of document, with indication, where appropriate, of the relevant passages | Relevant to claim No. |
|---|---|---|
| PX | CN 117876934 A (BEIJING WODONG TIANJUN INFORMATION TECHNOLOGY CO., LTD. et al.) 12 April 2024 (2024-04-12) <br> claims 1-17 | 1-19 |
| A | CN 111259804 A (HEFEI UNIVERSITY OF TECHNOLOGY) 09 June 2020 (2020-06-09) <br> description, paragraphs 38-49 | 1-19 |
| A | CN 115249304 A (TENCENT TECHNOLOGY (SHENZHEN) CO., LTD.) 28 October 2022 (2022-10-28) <br> entire document | 1-19 |
| A | CN 115859112 A (WEIMENG CHUANGKE NETWORK TECHNOLOGY (CHINA) CO., LTD.) 28 March 2023 (2023-03-28) <br> entire document | 1-19 |
| A | CN 116070169 A (TIANYI CLOUD TECHNOLOGY CO., LTD.) 05 May 2023 (2023-05-05) <br> entire document | 1-19 |

☑ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 April 2025** | **17 April 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/071813**

**C.    DOCUMENTS CONSIDERED TO BE RELEVANT**

| Category* | Citation of document, with indication, where appropriate, of the relevant passages | Relevant to claim No. |
|---|---|---|
| A | US 2023401833 A1 (TENCENT TECHNOLOGY (SHENZHEN) CO., LTD.) 14 December 2023 (2023-12-14)<br>    entire document | 1-19 |

**INTERNATIONAL SEARCH REPORT**
Information on patent family members

International application No.

**PCT/CN2025/071813**

| Patent document cited in search report | | | Publication date (day/month/year) | Patent family member(s) | | | Publication date (day/month/year) |
|---|---|---|---|---|---|---|---|
| CN | 117876934 | A | 12 April 2024 | None | | | |
| CN | 111259804 | A | 09 June 2020 | None | | | |
| CN | 115249304 | A | 28 October 2022 | None | | | |
| CN | 115859112 | A | 28 March 2023 | None | | | |
| CN | 116070169 | A | 05 May 2023 | None | | | |
| US | 2023401833 | A1 | 14 December 2023 | WO | 2023138188 | A1 | 27 July 2023 |
| | | | | CN | 116580257 | A | 11 August 2023 |
| | | | | HK | 40091019 | A0 | 01 December 2023 |

Form PCT/ISA/210 (patent family annex) (July 2022)

**EP 4 773 102 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410057649